# EUROPEAN PATENT APPLICATION

(11) **EP 4 793 409 A1**
(43) Date of publication of application: **19.08.2026**
(21) Application number: 24876945.7
(22) Date of filing: 26.08.2024
(51) Int. Cl.: C25B 9/00, C01B 3/04, C25B 1/04, C25B 1/55, C25B 9/01, C25B 9/50, C25B 11/052, C25B 11/057, C25B 11/077, C25B 11/087

(54) **WATER SPLITTING CELL FOR USE IN WATER SPLITTING DEVICE AND WATER SPLITTING DEVICE**

(30) Priority: 12.10.2023 JP 2023176913
(71) Applicant: Panasonic Holdings Corporation, Kadoma-shi, Osaka 571-8501 (JP)
(72) Inventor: FURUSAWA, Akio, Kadoma-shi, Osaka 571-0057 (JP); OKUNO, Kosuke, Kadoma-shi, Osaka 571-0057 (JP); TACHIKAWA, Takashi, Kobe, 657-8501 (JP)
(74) Representative: Grünecker Patent- und Rechtsanwälte PartG mbB
(86) International application number: PCT/JP2024/030248
(87) International publication number: WO 2025/079345

(57) **Abstract**

The water electrolysis cell is a water electrolysis cell for use in a water electrolysis apparatus that electrolyzes water when irradiated with light to generate hydrogen. The water electrolysis cell includes a laminate including an anode electrode, a perovskite battery cell, and a cathode electrode laminated in this order, and an electrically insulating protective material that covers the outer periphery of the laminate.

## Description

### Technical Field

The present disclosure relates to a water electrolysis apparatus that electrolyzes water into hydrogen and oxygen using light energy, and specifically to a water electrolysis apparatus in which, for example, an anode electrode and a cathode electrode are immersed in an electrolyte solution.

### Background Art

In order to reduce emissions of greenhouse gases, which are regarded as a main cause of global warming, the use of renewable energy is being promoted. While electric power can be obtained by solar power generation, wind power generation, tidal power generation, and the like, hydrogen is regarded as a promising energy source that can replace fuel. Since hydrogen can be used not only as a fuel substitute but also for power generation, the demand for hydrogen is expected to increase in the future.

It is possible to produce hydrogen by decomposing and reforming fossil fuels such as coal and natural gas at high temperatures. This method is called "gray hydrogen" because it emits greenhouse gases during production. There is "blue hydrogen", in which the emissions are considered substantially zero by recovering and storing the emitted greenhouse gases; however, it still emits greenhouse gases. In contrast, a method of producing hydrogen by electrolyzing water using electric power obtained from renewable energy such as solar power is called "green hydrogen" because it does not emit greenhouse gases.

A water electrolysis apparatus is an apparatus that electrolyzes water into hydrogen and oxygen using electric energy, and is composed of a power supply device that supplies electric power and an electrolytic tank that performs electrolysis. A solar panel is used as the power supply device in order to obtain electric power from renewable energy. When water is electrolyzed with this apparatus, oxygen is generated from the anode electrode side, and hydrogen is generated from the cathode electrode side. Currently, water electrolysis apparatuses that have been commercialized are still expensive, and there remain issues in widely spreading them in society. Specifically, it is necessary to develop semiconductor materials that efficiently convert light energy into electric power, techniques for transmitting electric power to the electrolytic tank with low loss, and catalysts, electrode configurations, and apparatus structures for efficiently electrolyzing water using electric power. Furthermore, since the water electrolysis apparatus is a complex system composed of a power supply device, a power transmission mechanism, and an electrolytic tank, a simple structure in which these are integrated is required.

As a water electrolysis apparatus that has achieved this, a chemical conversion apparatus in which TiO₂, Pt, and Ti are laminated has been proposed (e.g., see PTL 1 below). By arranging TiO₂, which exhibits high photocatalytic activity in the ultraviolet region, on the anode electrode, it becomes possible to electrolyze water to generate hydrogen and oxygen while increasing the amount of absorbed light.

A hydrogen-generating photodevice having an anode electrode formed by laminating TiO₂, ITO, p-Si, and n-Si and a Pt cathode electrode has also been proposed (e.g., see PTL 2 below). By employing such a structure, it is possible to increase the hydrogen evolution potential of TiO₂ by the electromotive potential generated by Si and thereby increase the hydrogen evolution efficiency.

Furthermore, metal oxide mesocrystals that suppress the charge recombination of photoexcited electron-hole pairs have been proposed (e.g., see PTL 3 below). By aligning metal oxide particles and arranging them regularly to form a mesocrystal structure, the photocatalytic activity can be enhanced.

### Citation List

### Patent Literature

PTL 1: Japanese Unexamined Patent Application Publication No. 2001-213608
PTL 2: Japanese Unexamined Patent Application Publication No. 2003-238104
PTL 3: Japanese Patent No. 6297095

### Summary of Invention

In the above water electrolysis apparatus, since TiO₂ has a band gap of 3.2 eV and an absorption edge wavelength of 388 nm, the absorption edge wavelength falls within the ultraviolet region of the solar spectrum. Since the proportion of the ultraviolet region in the solar energy is only 7%, light having high energy is necessary for efficient water electrolysis.

The above hydrogen-generating photodevice shows activity for 74% of the solar energy since Si has a band gap of 1.2 eV and an absorption edge wavelength of 1033 nm. However, it is difficult to obtain a potential necessary for water electrolysis because the onset voltage of TiO₂ upon light irradiation is higher than the open-circuit voltage of Si.

Although the above metal oxide mesocrystals can enhance the activity of a photocatalyst, it is not possible to electrolyze water because the metal mesocrystals alone cannot obtain a potential necessary for water electrolysis.

An object of the present disclosure is to provide a water electrolysis cell, which does not require a power supply device, for use in a water electrolysis apparatus, in order to address the issue that the system is complex in the water electrolysis apparatus.

As a result of studies on the above object, the water electrolysis cell according to the present disclosure is a water electrolysis cell for use in a water electrolysis apparatus that electrolyzes water when irradiated with light to generate hydrogen. The water electrolysis cell includes a laminate including an anode electrode, a perovskite battery cell, and a cathode electrode laminated in this order, and an electrically insulating protective material that covers an outer periphery of the laminate.

In the water electrolysis cell for use in a water electrolysis apparatus according to the present disclosure, the perovskite battery cell has a band gap of 1.55 eV and an absorption edge wavelength of 800 nm. Therefore, 55% of the solar energy can be utilized. That is, the water electrolysis cell according to the present disclosure has a wider wavelength range for absorbing solar energy than the above chemical conversion apparatus, has a higher efficiency in converting solar energy than the above hydrogen-generating photodevice, and can obtain a sufficient potential necessary for water electrolysis compared with the metal oxide mesocrystals.

When the water electrolysis cell is arranged to be immersed in an electrolyte solution charged in an electrolytic tank to form a water electrolysis apparatus, it can be used as a water electrolysis apparatus that electrolyzes water into hydrogen and oxygen using light energy. Furthermore, immersing a water electrolysis cell including a laminate in which an anode electrode, a perovskite battery cell, and a cathode electrode necessary for water electrolysis are laminated in this order in an electrolyte solution eliminates the need for a power supply device and a power transmission mechanism. As a result, it is possible to form a simple configuration in which only an electrolytic tank is provided in addition to the water electrolysis cell. In addition, a gas separation device is also unnecessary because hydrogen and oxygen are generated in different spaces. Moreover, the laminated structure of the anode electrode, the perovskite battery cell, and the cathode electrode enables efficient utilization of light energy.

### Brief Description of Drawings

[Fig. 1A] Fig. 1A is a front view of a water electrolysis apparatus according to Embodiment 1, viewed from the front side.
[Fig. 1B] Fig. 1B is a schematic top cross-sectional view of the water electrolysis apparatus taken along the section line 1B-1B shown in Fig. 1A, schematically illustrating the cross-sectional structure viewed from above.
[Fig. 1C] Fig. 1C is a schematic side cross-sectional view of the water electrolysis apparatus taken along the section line 1C-1C shown in Fig. 1A, illustrating the cross-sectional structure viewed from the side.
[Fig. 2] Fig. 2 is a diagram illustrating the relationship between the wavelengths of light incident on the anode electrode and the transmittance.
[Fig. 3] Fig. 3 is a diagram illustrating I-V curves of anode electrodes having different transmittances and perovskite battery cells obtained when they are laminated in respective pairs.
[Fig. 4] Fig. 4 is a diagram illustrating the relationship between the loading amount of the anode electrode and the transmittance of the anode electrode with respect to light having a wavelength of 620 nm.
[Fig. 5] Fig. 5 is a diagram illustrating the relationship between the transmittance of the anode electrode and the current that flows between the anode and cathode electrodes when a water electrolysis cell formed by laminating an anode electrode and a perovskite battery cell is irradiated with 1 sun of light.
[Fig. 6] Fig. 6 is a table showing the transmittances of water electrolysis cells using anode electrodes having different transmittances and the current values obtained when the water electrolysis cells were irradiated with 1 sun of light.

### Description of Embodiments

A water electrolysis cell according to a first aspect is a water electrolysis cell for use in a water electrolysis apparatus that electrolyzes water when irradiated with light to generate hydrogen. The water electrolysis cell includes a laminate including an anode electrode, a perovskite battery cell, and a cathode electrode laminated in this order, and an electrically insulating protective material that covers the outer periphery of the laminate.

In a water electrolysis cell according to a second aspect, a mesocrystal film may, in the first aspect, be formed on the anode electrode.

According to the above configuration, in the anode electrode, metal oxide particles are aligned and arranged regularly to form a mesocrystal structure. This enhances the photocatalytic activity.

In a water electrolysis cell according to a third aspect, the anode electrode may, in the first aspect, be a metal oxide.

In a water electrolysis cell according to a fourth aspect, the metal oxide may, in the third aspect, be an oxide of Fe, Cu, Zn, or Ni.

In a water electrolysis cell according to a fifth aspect, the metal oxide may, in the third aspect, be an oxide of Fe and the transmittance of the metal oxide at 620 nm may be 28% to 42%.

In a water electrolysis cell according to a sixth aspect, the metal oxide may, in the third aspect, be Ti-Fe₂O₃.

In a water electrolysis cell according to a seventh aspect, the anode electrode may, in the first aspect, be a metal nitride.

In a water electrolysis cell according to an eighth aspect, the metal nitride may, in the seventh aspect, be a nitride of Ta, Ba, La, or Ti.

According to the above configuration, since the onset voltage of the anode electrode upon light irradiation is lower than the open-circuit voltage of the perovskite battery cell, a potential necessary for water electrolysis can be obtained.

In a water electrolysis cell according to a ninth aspect, the perovskite battery cell may, in the first aspect, be a perovskite compound.

In a water electrolysis cell according to a tenth aspect, the perovskite battery cell may, in the ninth aspect, be (CH₃NH₃)PbI₃.

In a water electrolysis cell according to an eleventh aspect, the cathode electrode may, in the first aspect, include a material selected from the group consisting of Pt, C, and Ag.

In a water electrolysis cell according to a twelfth aspect, the electrically insulating protective material may, in the first aspect, be SiO₂ or Al₂O₃.

A water electrolysis apparatus according to a thirteenth aspect includes a water electrolysis cell according to any of the first to twelfth aspects, and an electrolytic tank in which the water electrolysis cell is immersed, the electrolytic tank being filled with an electrolyte solution.

The water electrolysis cell and the water electrolysis apparatus according to the present disclosure will be described below in further detail with reference to the attached drawings. The following description is illustrative of specific modes for implementing the present disclosure, and the present disclosure is not limited to such modes.

### (Embodiment 1)

### <Water Electrolysis Apparatus>

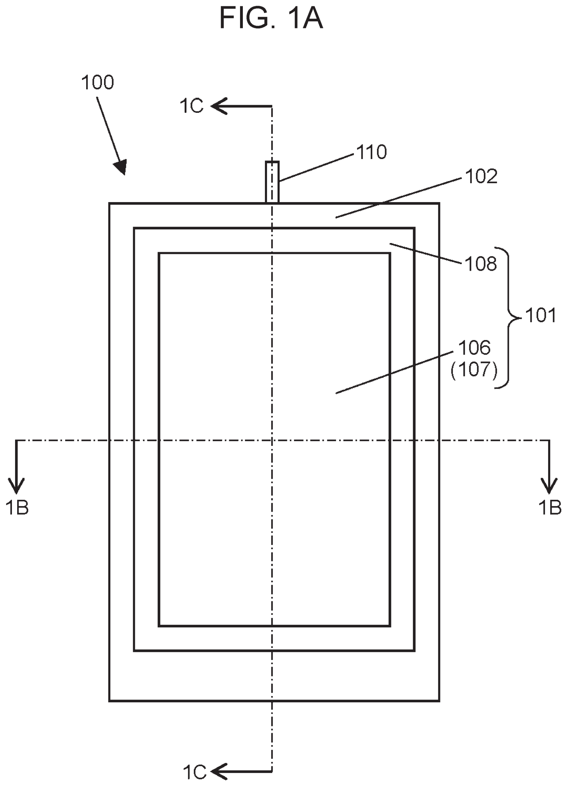

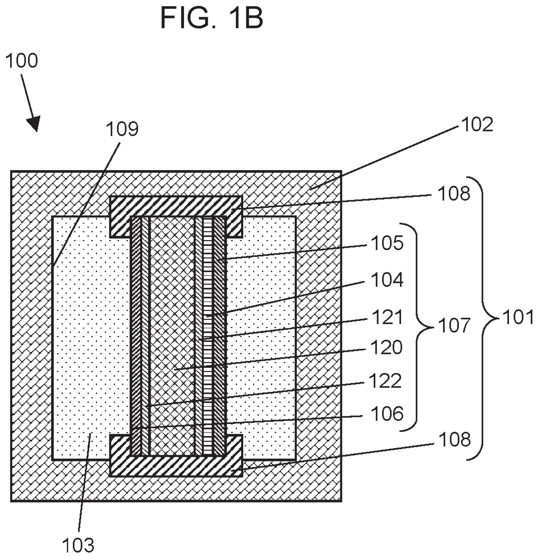

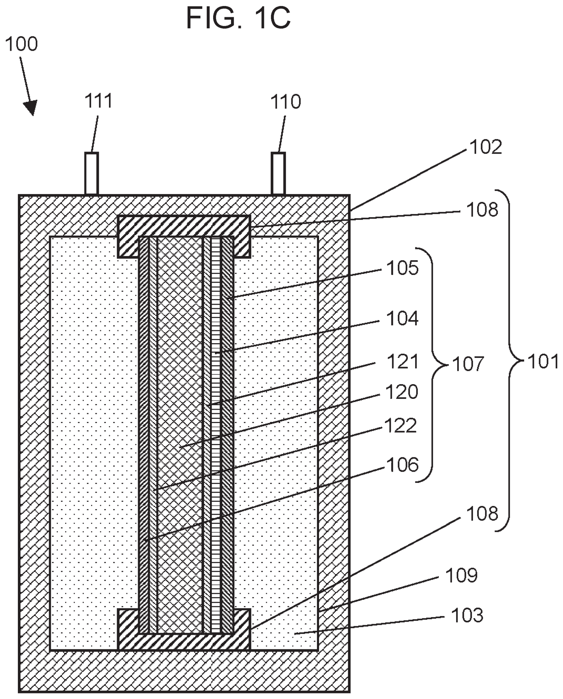

Fig. 1A is a front view of a water electrolysis apparatus according to Embodiment 1, viewed from the front side. Fig. 1B is a schematic top cross-sectional view of the water electrolysis apparatus taken along the section line 1B-1B shown in Fig. 1A, schematically illustrating the cross-sectional structure viewed from above. Fig. 1C is a schematic side cross-sectional view of the water electrolysis apparatus taken along the section line 1C-1C shown in Fig. 1A, illustrating the cross-sectional structure viewed from the side.

Figs. 1A to 1C illustrate, as an example of a water electrolysis apparatus 100, a mode in which a water electrolysis cell 101 is immersed in an electrolyte solution 103 charged in an electrolytic tank 102. While the details will be described later, since the electrolytic tank 102 and the electrolyte solution 103 transmit light, the water electrolysis cell 101 (an anode electrode 106 (a laminate 107) and a protective material 108 disposed on the outer periphery thereof) immersed in the electrolyte solution 103 in the electrolytic tank 102 can be visually recognized when the water electrolysis apparatus 100 is viewed from the front side. In the water electrolysis cell 101, a first transparent electrode film 121, a perovskite battery cell 104, and a cathode electrode 105 are arranged in this order on one surface of a glass plate 120, and a second transparent electrode film 122 and an anode electrode 106 are arranged in this order on the other surface of the glass plate 120. The outer periphery of a laminate 107 formed by the cathode electrode 105, the perovskite battery cell 104, the first transparent electrode film 121, the glass plate 120, the second transparent electrode film 122, and the anode electrode 106 is covered with a protective material 108.

The protective material 108 of the water electrolysis cell 101 is fixed to an inner wall 109 of the electrolytic tank 102, and the water electrolysis cell 101 divides the electrolyte solution 103 into two portions, namely a cathode electrode side and an anode electrode side. Since the electrolyte solution 103 on the cathode electrode side and the electrolyte solution 103 on the anode electrode side can communicate with each other through a pipe (not shown) disposed outside the electrolytic tank 102, ion exchange of the electrolyte solution 103 is possible between the cathode electrode side and the anode electrode side.

The water electrolysis apparatus 100 according to Embodiment 1 is an apparatus that electrolyzes water into hydrogen and oxygen using light energy. For example, when light energy is incident on the anode electrode 106 side, electrons are excited in the anode electrode 106 and the perovskite battery cell 104, and the electrons move to the cathode electrode 105 to reduce hydrogen ions to generate hydrogen. On the other hand, in the anode electrode 106, hydroxide ions are oxidized to generate oxygen. The hydrogen generated at the cathode electrode 105 is collected through a hydrogen collection port 110, and the oxygen generated at the anode electrode 106 is collected through an oxygen collection port 111.

### <Water Electrolysis Cell>

The water electrolysis cell 101 includes a laminate 107 in which a cathode electrode 105, a perovskite battery cell 104, a first transparent electrode film 121, a glass plate 120, a second transparent electrode film 122, and an anode electrode 106 are laminated in this order, and a protective material 108 that covers the outer periphery of the laminate 107. The layers except the glass plate 120 are electrically connected to one another. The size of the laminate 107 is, for example, 20 mm long and 25 mm wide. The entire periphery of the laminate 107 is covered with the protective material 108. This structure prevents penetration of the electrolyte solution 103 into the perovskite battery cell 104 disposed inside the laminate 107 and deterioration of the perovskite battery cell 104. The size of the laminate 107 is not limited to 20 mm × 25 mm, and may be any size such as 100 mm × 100 mm or 300 mm × 100 mm.

### <Glass Plate and Transparent Electrode Films>

The material of the glass plate 120 is, for example, alumino-borosilicate glass, and the thickness is, for example, 1.0 mm. The glass plate 120 transmits light in order to allow the perovskite battery cell 104 to absorb the light energy incident from the anode electrode 106 side. The material of the glass plate 120 is not limited to alumino-borosilicate glass and may be any material that transmits light, such as quartz glass, aluminum oxide glass, or soda-lime glass. The thickness is not limited to 1.0 mm, and may be, for example, 2.2 mm or 0.8 mm. In the manufacturing process of the laminate 107, a transparent electrode film (fluorine-doped tin oxide (FTO)) is formed on each of the two surfaces of the glass plate 120. The transparent electrode film on one surface functions as the first transparent electrode film 121, and the transparent electrode film on the other surface functions as the second transparent electrode film 122.

### <Cathode Electrode>

The material of the cathode electrode 105 is, for example, Pt, and the thickness is 0.1 mm. The cathode electrode 105 needs to be chemically stable in the electrolyte solution 103 so as not to react with the electrolyte solution 103 and thereby corrode or cause a chemical reaction. The cathode electrode 105 also needs to have the ability to conduct excited electrons, and further needs to have reactivity such that a reduction reaction occurs on the cathode electrode to generate hydrogen. The material of the cathode electrode 105 is not limited to Pt, and may be Ag, C, or the like. When C is used, the form is not limited to carbon, and may be graphite, graphene, or the like.

### <Anode Electrode>

The material of the anode electrode 106 is, for example, a mesocrystal of Ti-Fe₂O₃ (α-Fe₂O₃ (hematite) containing Ti), and is a mesocrystal film having a thickness of, for example, 1 µm. A mesocrystal is an aggregate of particles in which crystalline nanoparticles are densely and regularly aligned and aggregated. A mesocrystal of a metal oxide is capable of highly efficient charge transport because the crystalline nanoparticles are regularly and uniformly in contact with one another. When a mesocrystal of Ti-Fe₂O₃ is used for the anode electrode, the anode electrode itself has a photocatalytic function, and when light energy is incident from the anode electrode 106 side, electrons are excited in the anode electrode 106. The Ti content in Ti-Fe₂O₃ is, for example, preferably 0.2:10 to 2:10, more preferably 0.5:10 to 1:10, in terms of Ti:Fe ratio. As a specific example, the Ti:Fe ratio may be 1:10. The average particle size of Ti-Fe₂O₃ is, for example, 100 nm, and a thin film is formed using an electrostatic spraying device. The thin-film formation is not limited to electrostatic spraying, and spin coating, bar coating, die coating, inkjet, and the like may also be used. The anode electrode 106 also needs to be chemically stable in the electrolyte solution 103 so as not to react with the electrolyte solution 103 and thereby corrode or cause a chemical reaction. The anode electrode 106 also needs to have the ability to conduct excited electrons, and further needs to have reactivity such that an oxidation reaction occurs on the anode electrode to generate oxygen. The material of the anode electrode 106 is not limited to Ti-Fe₂O₃, and may be a metal oxide such as Cu, Zn, or Ni. Moreover, metal nitrides such as Ta₃N₅, BaTaO₂N, and LaTiO₂N may also be used.

### <Perovskite Battery Cell>

The perovskite battery cell 104 is a solar cell using a semiconductor material having a perovskite structure (perovskite semiconductor). The perovskite semiconductor is, for example, CH₃NH₃PbI₃, and the thickness of the entire perovskite battery cell 104 is 0.3 µm. A perovskite structure refers to a substance having a crystal structure with the chemical formula ABX₃. In a typical perovskite structure, A is an alkali metal, B is a transition metal, and X is a halogen atom. In contrast, in the above CH₃NH₃PbI₃, A is a methylammonium ion (CH₃NH₃)⁺, B is a lead(II) ion Pb²⁺, and X is a halide ion I⁻. The perovskite semiconductor used for the perovskite battery cell 104 is not limited to CH₃NH₃PbI₃, and may also be CH₃NH₃PbCl₃, CH₃NH₃PbBr₃, or the like. Since the perovskite semiconductor deteriorates due to moisture, it is necessary to ensure moisture resistance for long-term use.

### <Protective Material>

The protective material 108 is, for example, SiO₂, and has a thickness of 2.0 mm. The thickness is the distance from the position at which the protective material 108 is in contact with the laminate 107 to the surface of the protective material 108. The protective material 108 is formed on the side surface of the laminate 107, on the cathode electrode 105 side, and on the anode electrode 106 side. Although the material of the protective material 108 is SiO₂, it is not limited to SiO₂ and may be any material having water resistance, such as Al₂O₃ or MgO.

### <Electrolytic Tank>

The material of the electrolytic tank 102 is, for example, borosilicate glass, and the thickness is, for example, 4 mm. The electrolytic tank 102 is filled with the electrolyte solution 103, and the water electrolysis cell 101 is immersed therein. When the water electrolysis cell 101 is irradiated with light from the anode electrode 106 side, the light is partially absorbed by the anode electrode 106, and the light that is not absorbed reaches the perovskite battery cell 104. In this case, electrons and holes are generated in the anode electrode 106 and the perovskite battery cell 104 by photoexcitation. The electrons and the holes move to the cathode electrode 105 side and the anode electrode 106 side, respectively, where the electrons participate in the reduction reaction of hydrogen and the holes participate in the oxidation reaction of oxygen. Although the material of the electrolytic tank 102 is borosilicate glass, it is not limited to borosilicate glass and may be any material that transmits light, such as soda-lime glass, quartz glass, or a transparent resin. Since light is incident from the anode electrode 106 side, the five surfaces other than the anode electrode 106 side may be made of a material that does not transmit light. Examples of materials that do not transmit light include metals such as aluminum and stainless steel. When a material that does not transmit light and reflects light is used, light energy that has not been absorbed by the laminate 107 and that has passed through or has been reflected can be incident again on the laminate 107, thereby improving the efficiency of light energy utilization. Furthermore, the anode electrode 106 side of the electrolytic tank 102 does not need to be entirely made of a material that transmits light; it is sufficient that at least a portion corresponding to an area of the laminate 107 which is exposed from the protective material 108 is made of a material that transmits light.

### <Electrolyte Solution>

The electrolyte solution 103 is, for example, a sodium hydroxide solution, and the concentration of hydroxide ions is, for example, 1 mol/L. The electrolyte solution 103 is not limited to a sodium hydroxide solution and may be any liquid having high conductivity, such as a potassium hydroxide solution or a sodium hydrogencarbonate solution.

### <Transmittance of Anode Electrode>

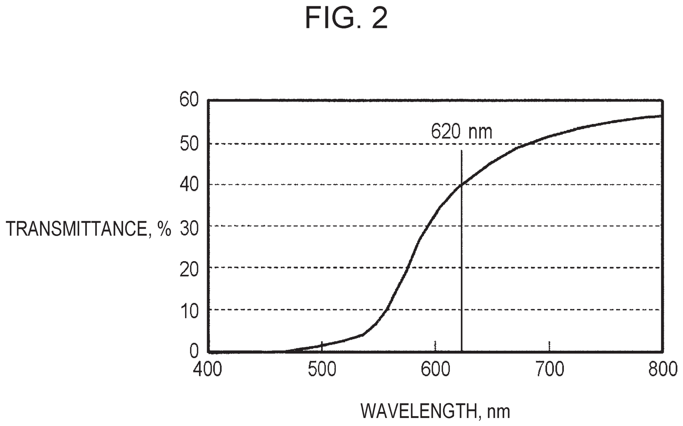

The water electrolysis cell 101 has a structure in which the anode electrode 106 and the perovskite battery cell 104 are laminated with the glass plate 120 interposed therebetween, the glass plate 120 on which the first and second transparent electrode films 121 and 122 are formed. Light is incident from the anode electrode 106 side. Part of the incident light is absorbed by the anode electrode 106, and the light that is not absorbed passes through the anode electrode 106, further passes through the second transparent electrode film 122, the glass plate 120, and the first transparent electrode film 121, and reaches the perovskite battery cell 104 to be absorbed. As one example, Fig. 2 illustrates the spectral transmittance of an anode electrode 106 prepared using Ti-Fe₂O₃ with a loading amount of 58 µg/cm², which is the weight of Fe per unit area (hereinafter referred to as "loading amount"). Note that the loading amount is determined by quantitative analysis on the basis of the fluorescent X-ray intensity of Fe using an energy-dispersive fluorescent X-ray analyzer. In a wavelength region of 550 nm or less, the transmittance is 10% or less, and most of the light is absorbed. The longer the wavelength, the higher the transmittance. In a wavelength region of 700 nm or more, the transmittance is 50% or more, and the transmitted light increases. Since the band gap of Ti-Fe₂O₃ is 1.97 eV and the absorption edge wavelength is 620 nm, the absorbance changes significantly around this wavelength. Fig. 2 illustrates the transmittance at a loading amount of 58 µg/cm². The higher the loading amount, the lower the transmittance because of an increase in the amount of absorbed light. The lower the loading amount, the higher the transmittance because of a decrease in the amount of absorbed light.

### <I-V Curve>

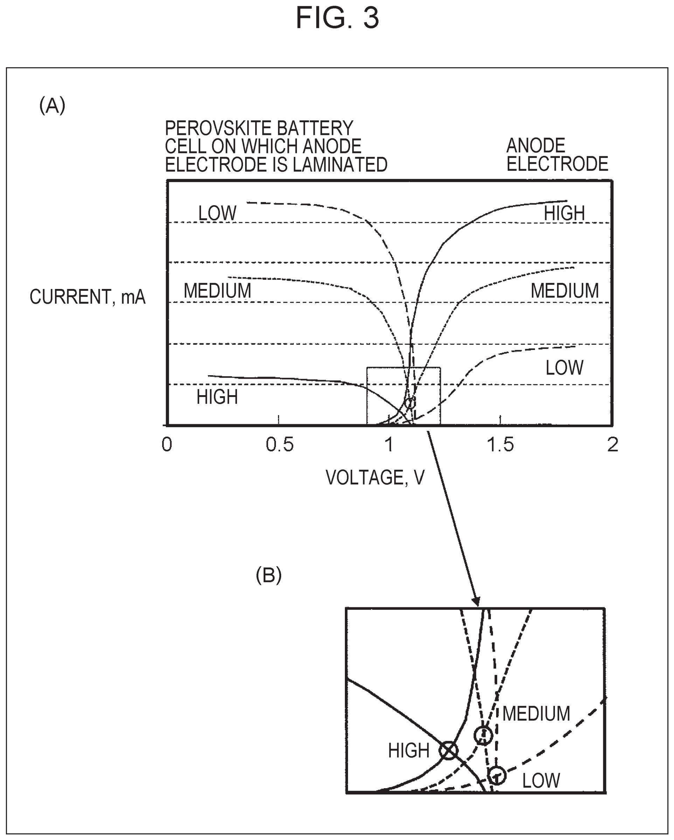

Since the anode electrode 106 and the perovskite battery cell 104 are laminated, as described above, when the anode electrode is Ti-Fe₂O₃, a large number of electrons are excited in the anode electrode 106 when the amount of light absorbed by the anode electrode 106 is large. On the other hand, excited electrons in the perovskite battery cell 104 decrease. In contrast, when the amount of light absorbed by the anode electrode 106 is small, excitation of electrons in the anode electrode 106 decreases, and excited electrons in the perovskite battery cell 104 increase. Fig. 3(A) illustrates the I-V curves of anode electrodes 106 having different loading amounts, and the I-V curves of perovskite battery cells 104 alone when each anode electrode 106 is laminated with the perovskite battery cell 104. In Fig. 3, "high", "medium", and "low" refer to the loading amounts of the anode electrode 106. When the loading amount of the anode electrode 106 is high, the current value of the anode electrode 106 is high, whereas the current value of the perovskite battery cell 104 is low. When the loading amount of the anode electrode 106 decreases to "medium", the current value of the perovskite battery cell 104 increases. When the loading amount of the anode electrode 106 decreases to "low", the current value of the perovskite battery cell 104 further increases.

When the anode electrode 106 and the perovskite battery cell 104 are connected, the current indicated by the intersection of the I-V curves of the anode electrode 106 and the perovskite battery cell 104 flows. Fig. 3(B) is an enlarged view of the vicinity of the intersections of the I-V curves shown in Fig. 3(A). The current value indicated by the intersection varies with the loading amount of the anode electrode 106; the current value is the highest when the loading amount is medium. That is, this indicates that the efficiency of water electrolysis is the highest when the loading amount is medium.

### <Loading Amount and Transmittance of Anode Electrode>

The water electrolysis apparatus 100 according to Embodiment 1 has a structure in which the anode electrode 106 and the perovskite battery cell 104 are laminated. Therefore, it is necessary to adjust the light energy that passes through the anode electrode 106 and reaches the perovskite battery cell 104 so that it falls within an appropriate range. In particular, the transmittance of the anode electrode 106 plays an important role.

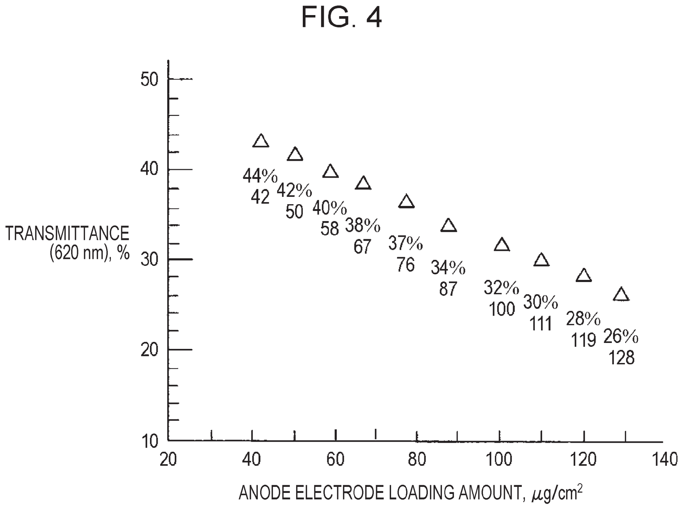

Fig. 4 illustrates the relationship between the loading amount of the anode electrode 106 and the transmittance of the anode electrode 106 with respect to light having a wavelength of 620 nm (hereinafter may be referred to simply as "transmittance"). The transmittance at a loading amount of 42 µg/cm² is 44%, and when the loading amount increases to 50 µg/cm², the transmittance decreases to 42%. The transmittance decreases with an increase in the loading amount; the transmittance at a loading amount of 128 µg/cm² is 26%.

### <Transmittance of Anode Electrode and Photocurrent>

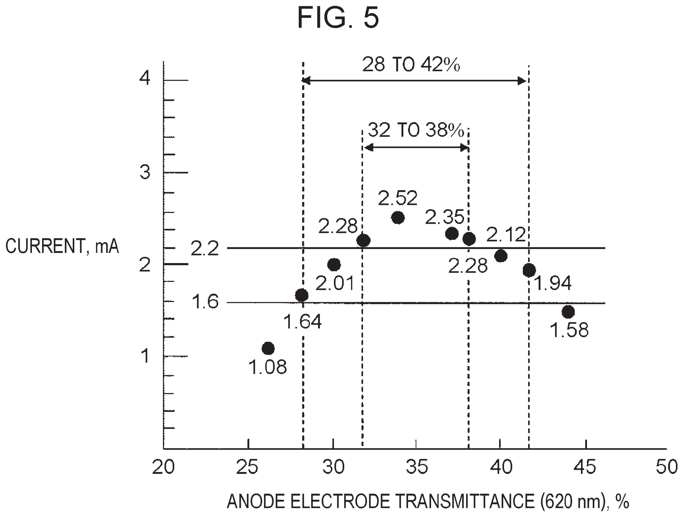

Fig. 5 illustrates a current that flows between the perovskite battery cell 104 and the cathode electrode 105 when a water electrolysis cell in which the anode electrode 106, the perovskite battery cell 104, and the cathode electrode 105 are laminated in this order is irradiated with 1 sun of light. In Fig. 5, the horizontal axis represents the transmittance of the anode electrode 106 with respect to light at 620 nm, and the vertical axis represents the current value between the measurement terminals of the perovskite battery cell 104 and the cathode electrode 105. In order to measure the current that flows between the perovskite battery cell 104 and the cathode electrode 105, the perovskite battery cell 104 and the cathode electrode 105 were insulated from each other, and lead wires were provided from each of the perovskite battery cell 104 and the cathode electrode 105 to measure the current value.

When the transmittance of the anode electrode 106 is 34%, the current value is 2.52 mA. When the transmittance changes to 30%, the current value decreases to 2.01 mA. When the transmittance changes to 26%, the current value decreases to 1.08 mA. This is considered to be because the light energy that reaches the perovskite battery cell 104 decreases with the decrease in the transmittance, and therefore the electrons excited in the perovskite battery cell 104 decrease. On the other hand, when the transmittance of the anode electrode 106 is 34%, the current value is 2.52 mA, and when the transmittance changes to 38%, the current value decreases to 2.28 mA. When the transmittance changes to 42%, the current value decreases to 1.94 mA. This is considered to be because the amount of mesocrystals in the anode electrode 106 decreases, and therefore the electrons excited in the anode electrode 106 decrease.

As can be understood from Fig. 5, the current that flows between the perovskite battery cell 104 and the cathode electrode 105 decreases when the transmittance of the anode electrode 106 is lower than about 34%. The current value needs to be 1.6 mA or more, and is preferably 2.2 mA or more. Accordingly, the transmittance of the anode electrode 106 needs to be 28% or more, and is preferably 32% or more. In addition, the current value decreases when the transmittance of the anode electrode 106 is higher than about 34%. Since the current value needs to be 1.6 mA or more, and is preferably 2.2 mA or more, the transmittance of the anode electrode 106 needs to be 42% or less, and is preferably 38% or less.

Accordingly, in a preferred mode according to Embodiment 1, the transmittance of the anode electrode 106 with respect to light at 620 nm is 28% to 42%, and in a more preferred mode, 32% to 38%. With the transmittance of the anode electrode 106 being within this range, light energy can be efficiently utilized by the laminated structure of the anode electrode 106, the perovskite battery cell 104, and the cathode electrode 105.

### <Examples and Comparative Examples>

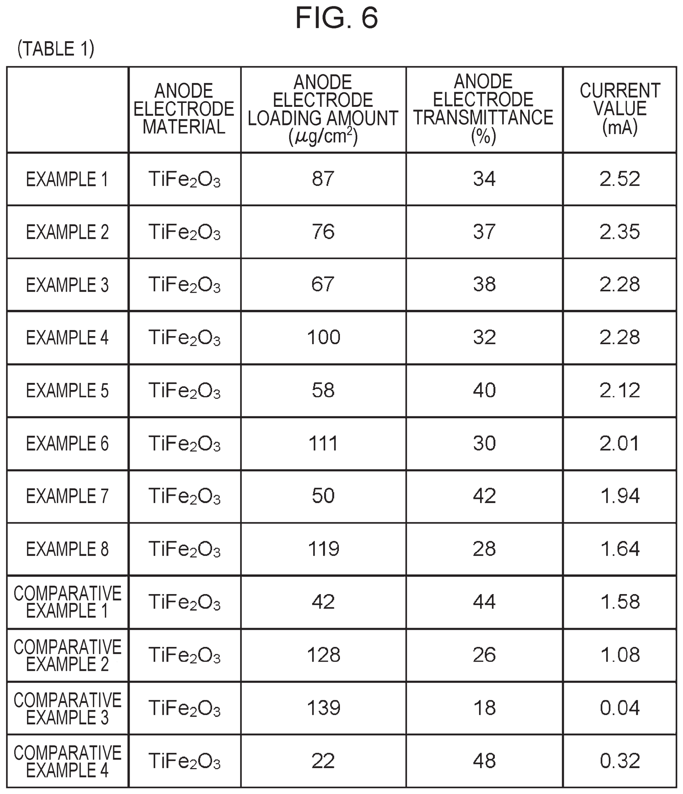

In the water electrolysis apparatus, it is necessary to efficiently utilize light energy in order to enhance economic efficiency. To examine this, an experiment was conducted in which water electrolysis cells having various loading amounts of the anode electrode were prepared in the same manner as above, and their current values were evaluated. Table 1 of Fig. 6 shows the results.

In the evaluation column of Table 1, a reference current value is set to 1.6 mA; when the measured current value is 1.6 mA or more, it indicates a good evaluation. When the measured current value is 2.2 mA or more, it indicates a sufficiently good evaluation. When the measured current value is less than 1.6 mA, it indicates an evaluation that does not satisfy the reference current value. Hereinafter, an experimental example in which the measured current value was 1.6 mA or more, which serves as the reference, is referred to as "Example", and an experimental example in which the measured current value was less than 1.6 mA, which serves as the reference, is referred to as "Comparative Example". The above classification of Examples and Comparative Examples is merely an example and is not limited thereto, since the reference current value varies depending on the required conditions. For example, in another case, when the measured current value is 1.0 mA or more, it may be used as an Example. Alternatively, when the measured current value is more than 0, it may be used as an Example.

### [Example 1]

An anode electrode having a loading amount of 87 µg/cm² was prepared, and its transmittance was measured. The transmittance was 34%. In a water electrolysis apparatus in which a water electrolysis cell using the anode electrode was immersed in an electrolyte solution, the current value between the perovskite battery cell and the cathode electrode was evaluated in the same manner as above. The current value of the water electrolysis apparatus was measured. The measured current value was 2.52 mA. This indicates that the amount of hydrogen generated is sufficient.

### [Examples 2 to 8 and Comparative Examples 1 to 4]

In the same manner as in Example 1, in a water electrolysis apparatus in which a water electrolysis cell using an anode electrode having the transmittance shown in Table 1 was immersed in an electrolyte solution, the current value between the perovskite battery cell and the cathode electrode was evaluated. As can be understood from Table 1, when the transmittance of the anode electrode is 28% or more, the current value is 1.6 mA or more, and the reference current value can be achieved. When the transmittance of the anode electrode exceeds 42%, the current value decreases to less than 1.6 mA, and therefore the efficiency cannot necessarily be said to be sufficient. From these results, the transmittance of the anode electrode required to obtain the predetermined efficiency is 28% or more and 42% or less. In addition, in consideration of high efficiency, the transmittance of the anode electrode is preferably 32% or more and 38% or less. While the above describes the case in which the anode electrode 106 is Ti-Fe₂O₃, the same applies not only when Fe₂O₃ is doped with Ti but also when doped with a metal other than Ti.

From these results, a water electrolysis cell having a laminate in which an anode electrode, a perovskite battery cell, and a cathode electrode are laminated, with the transmittance of the anode electrode being adjusted to fall within a predetermined range, can efficiently utilize light energy.

### Industrial Applicability

When a water electrolysis apparatus is configured using the water electrolysis cell according to the present disclosure, an anode electrode, a perovskite battery cell, and a cathode electrode necessary for water electrolysis are laminated in this order and immersed in an electrolyte solution. This eliminates the need for a power supply device and a power transmission mechanism. As a result, it is possible to form a simple configuration in which only an electrolytic tank is provided. In addition, a gas separation device is also unnecessary because hydrogen and oxygen are generated in different spaces. Moreover, when mesocrystals of Ti-Fe₂O₃ are used for the anode electrode, the laminated structure of the perovskite battery cell and the cathode electrode enables efficient utilization of light energy.

### Reference Signs List

- 100: water electrolysis apparatus
- 101: water electrolysis cell
- 102: electrolytic tank
- 103: electrolyte solution
- 104: perovskite battery cell
- 105: cathode electrode
- 106: anode electrode
- 107: laminate
- 108: protective material
- 109: inner wall
- 110: hydrogen collection port
- 111: oxygen collection port
- 120: glass plate
- 121: first transparent electrode film
- 122: second transparent electrode film

## Claims

1. A water electrolysis cell for use in a water electrolysis apparatus that electrolyzes water when irradiated with light to generate hydrogen, the water electrolysis cell comprising:
a laminate including an anode electrode, a perovskite battery cell, and a cathode electrode laminated in this order; and
an electrically insulating protective material that covers an outer periphery of the laminate.

2. The water electrolysis cell according to claim 1, wherein the anode electrode is a mesocrystal film.

3. The water electrolysis cell according to claim 1, wherein the anode electrode is a metal oxide.

4. The water electrolysis cell according to claim 3, wherein the metal oxide includes a material selected from the group consisting of Fe, Cu, Zn, and Ni.

5. The water electrolysis cell according to claim 3, wherein the metal oxide is an oxide of Fe, and
a transmittance of the metal oxide at 620 nm is 28% to 42%.

6. The water electrolysis cell according to claim 3, wherein the metal oxide is Ti-Fe₂O₃.

7. The water electrolysis cell according to claim 1, wherein the anode electrode is a metal nitride.

8. The water electrolysis cell according to claim 7, wherein the metal nitride includes a material selected from the group consisting of Ta, Ba, La, and Ti.

9. The water electrolysis cell according to claim 1, wherein the perovskite battery cell is a perovskite compound.

10. The water electrolysis cell according to claim 9, wherein the perovskite battery cell is (CH₃NH₃)PbI₃.

11. The water electrolysis cell according to claim 1, wherein the cathode electrode includes a material selected from the group consisting of Pt, C, and Ag.

12. The water electrolysis cell according to claim 1, wherein the electrically insulating protective material is SiO₂ or Al₂O₃.

13. A water electrolysis apparatus comprising:
the water electrolysis cell according to any one of claims 1 to 12; and
an electrolytic tank in which the water electrolysis cell is immersed, the electrolytic tank being filled with an electrolyte solution.
